# EUROPEAN PATENT SPECIFICATION

(11) **EP 0 611 386 B1**
(45) Date of publication and mention of the grant of the patent: **28.02.1996**
(21) Application number: 92924231.1
(22) Date of filing: 03.11.1992
(51) Int. Cl.: C09J 7/02, B32B 27/32, G09F 3/10, G09F 3/02

(54) **MICROPOROUS PRESSURE SENSITIVE ADHESIVE COATED SHEETING**
MIKROPORÖSE FOLIE MIT HAFTKLEBERBESCHICHTUNG
FEUILLES MICROPOREUSES REVETUES D'UN ADHESIF AUTOCOLLANT

(30) Priority: 04.11.1991 US 787535
(43) Date of publication of application: 24.08.1994
(73) Proprietor: MINNESOTA MINING AND MANUFACTURING COMPANY, St. Paul, Minnesota 55133-3427 (US)
(72) Inventor: KINZER, Kevin, E., Saint Paul, MN 55133-3427 (US); DEJONG, Dej, Saint Paul, MN 55133-3427 (US); BARTUSIAK, Joseph, T., Saint Paul, MN 55133-3427 (US)
(74) Representative: VOSSIUS & PARTNER
(86) International application number: US9209423
(87) International publication number: WO9309195

(56) References cited:
- EP-A- 0 105 629
- EP-A- 0 289 859
- US-A- 4 484 574
- US-A- 4 892 779
- US-E- 32 929

## Description

### Technical Field

The present invention relates to microporous sheeting particularly microporous polyethylene sheeting coated with pressure sensitive adhesive useful as labelstock and architectural sign substrates.

### Background of the Invention

Various types of adhesive coated polymeric sheetings are known in the art. For example, adhesive coated polyvinylchloride film has been used as pressure sensitive labelstock in applications where the label will not be exposed to elevated temperatures, since the polyvinylchloride label tends to deform and shrink when exposed to higher than ambient temperatures.

A multilayer polymeric label for example, of polypropylene coextruded with a skin layer of acrylonitrile, butadiene or polystyrene is disclosed in U.S. Patent 4,713,273. Such labels may be readily coated with conventional pressure sensitive adhesives and have a greater resistance to deformation when exposed to elevated temperatures than polyvinylchloride film labels.

Polymeric sheetings of low or medium density polyethylene film having a thickness between 0.05 mm and 0.127 mm are disclosed in U.S. Patent Re. 32,929. Such sheetings are deformable and when adhesive coated can be directly applied onto plastic substrates. These sheetings are alleged to conform readily to the shape of the substrate surface to which they are applied without wrinkling or cracking.

Plasticized polymeric articles, for example, plasticized polyvinylchloride substrates or plasticized polyvinylchloride bottles are difficult to decorate with conventional adhesive coated film labels. The plasticizer contained in the polyvinylchloride article tends to migrate to the surface of the article and into the pressure sensitive adhesive interface between the substrate and sheeting. Migration of plasticizer occurs slowly even under ambient conditions, however the rate of migration tends to increase when the article is exposed to elevated temperatures. Plasticizer migration into the pressure sensitive adhesive layer reduces the adhesive bond between the sheeting and the plasticized substrate. Degradation of the adhesive bond can result in fraying along the edges of the label, lifting of portions of the label from the article and/or accumulation of dirt. The problem of plasticizer migration from a plasticized polyvinylchloride substrate into a contacting adhesive layer resulting in loss of adhesion is described, for example, in U.S. Patent Re. 32,929 at col. 5, lines 43-57.

A class of multilayered sheetings known in the art as heat transferable sheetings can be transferred from a carrier substrate to a receiving article or other plastic substrate by application of heat and pressure. The heat activates a heat activatable adhesive, typically a polyamide adhesive, which causes the multilayered polymeric label to permanently adhere to the receiving article. Heat transferable sheetings of this type are disclosed for example in U.S. Patents 4,557,964 and 4,927,709. Such sheeting can be used successfully on plasticized polyvinylchloride substrates, without noticeable loss of adhesion or sheeting quality, since the heat activatable adhesive apparently resists attack by the plasticizer oil. Heat transferable labels have the disadvantage that they require heat and pressure and complicated apparatus label application.

In some applications, a polymeric film label must be exposed to high temperatures, that is, 200°F and higher. For example, the necessity of exposing a label on the article to steam sterilization poses unique problems. Such exposure of conventional polymeric film labels, such as the above referenced polyvinylchloride, polyethylene, or polypropylene labels, may deform and/or degrade the labels under such conditions.

In U.S. Patent 4,861,644, a microporous material of linear ultrahigh molecular weight polyolefin is described.

A commercial embodiment of the invention disclosed in U.S. Patent 4,861,644 is available from PPG Industries under the trade designation "TESLIN". TESLIN has been advertised for use in labels, book covers and menus. It has been advertised for use as a labelstock with pressure sensitive adhesives and for application as a drum label and battery label in view of its flexible, heat resistant and chemical resistant properties.

### Summary of the Invention

Briefly, in one aspect of the present invention, a pressure sensitive adhesive (PSA) coated sheeting is provided comprising a pressure sensitive adhesive coating and a microporous polyolefin substrate comprising ultrahigh molecular weight linear polyethylene having an intrinsic viscosity of at least 18 decaliters/gram. The PSA coated sheeting is particularly useful when applied to plasticized polymeric surfaces, particularly plasticized polyvinylchloride. The PSA-coated sheeting has the unique property of entrapping the migrating plasticizer. The microporous polyolefin substrate contains a network of interconnecting pores distributed throughout. Preferably, the microporous polyolefin substrate is formed of ultrahigh molecular weight, high density polyethylene or ultrahigh molecular weight polypropylene.

Plasticizers commonly used in many plasticized materials such as plasticized polyvinylchloride tend to migrate to the surface of the material over a period of time. Migration tends to occur more rapidly when the plasticized material is exposed to elevated temperatures. Advantageously when the PSA-coated sheeting is applied to a plasticized substrate, the plasticizer migrates through the PSA coating on the sheeting and preferentially accumulates within the network of interconnecting pores of the microporous polyolefin substrate rather than within the PSA layer. Ideally, more plasticizer accumulates within the network of interconnecting pores than within the PSA layer. As a result plasticizer does not accumulate within the PSA layer in sufficient quantity to diminish the quality and properties of the PSA when the PSA-coated sheeting is applied to the plasticized material.

### Description of the Preferred Embodiment(s)

Plasticized polyvinylchloride bags are commonly used to store blood in a hospital. The empty bag must be prelabeled and sterilized prior to use typically by subjecting the bag to steam at temperatures up to about 250°F (121°C). The bags are commonly referred to in the hospital as blood bags. It is important that the label applied to such bags withstand these high temperatures. The label of course should not crack, deform, wrinkle or delaminate during the sterilization process and subsequent handling. We have determined that suitable pressure sensitive adhesive labels for blood bags can be formed of pressure sensitive adhesive coated "TESLIN" film. These labels are readily printable and will not delaminate, wrinkle or deform when applied to blood bags and exposed to temperatures up to 250°F (121°C) during the sterilization process. Moreover, the adhesive can be selected from conventional acrylic pressure sensitive adhesives. The adhesive is not believed to be critical and other conventional pressure sensitive adhesives such as rubber/resin adhesives could be employed provided they are formulated to withstand a wide range of temperatures, for example from less than -13°F (-25°C) to above 250°F (121°C).

The usefulness of the present invention is not limited to highly plasticized PVD bags. Exploitation of the unique properties of the pressure-sensitive adhesive coated microporous film provides for many diverse uses. For example, the combination of the present invention with graphic arts, provides for a graphic marking film for application on a highly plasticized version of truck canvas. Such a truck canvas, commonly used outside the United States (for example, a 20 mil highly plasticized vinyl film reinforced with a scrim commercially available from Veseidag Co. under the trade designation of DURASKIN), is flexible and subjected to a wide range of environmental conditions, such as temperature variations, dry heat, humidity and the like. In addition, when in use on the side of truck, the canvas is subject to continuous flexing and vibration (typically as a result of the truck traveling at highway speeds).

Microporous ultrahigh molecular weight polyolefin material, e.g. TESLIN film, has been advertised in the art as suitable as a PSA sheeting, in particular, suitable as labelstock. In addition to known advantageous properties of this material, such as flexibility, stretchability, heat and chemical resistance, it has been discovered that such adhesive coated microporous polyolefin film when applied to plasticized polymeric substrates, such as plasticized polyvinylchloride, provides superior resistance to adhesion bond deterioration over art known adhesive coated nonporous polyolefin films. This superior resistance to deterioration is exhibited for application temperatures from ambient temperature up to about 400°F (204°C).

Plasticizers typically employed in plasticized polymer films include phthalic esters, e.g., dioctylphthalate, dioctylisophthalate, diisooctylphthalate, butylbenzylphthalate, dibutylphthalate; dibasic acid esters, e.g., dioctyladipate, di-n-hexyl-azealate, dioctylsebacate; trimellitates, e.g., trioctylmellitate, triisooctylmellitate; phosphates, e.g., tricresylphosphate, octyldiphenylphosphate; epoxides, e.g., epoxidized soybean oil; benzoates, e.g., diethylene glycol dibenzoate; citrates, e.g., acetyltrioctylcitrate. The plasticizers contained in a plastic materials generally migrates to the surface and collects in the adhesive layer, tending to degrade and deteriorate the adhesive bond. The resulting effect is wrinkling or creasing of the sheeting and eventually delamination of the sheeting from the plasticized material. Adhesive deterioration is exacerbated as the exposure temperature increases, since the rate of migration of the plasticizer increases as the temperature increases. It has been determined that microporous polymeric film, particularly TESLIN film, coated with any art known acrylic PSAs, entraps the plasticizers as they migrate from the plasticized substrate. The resultant effect is that the plasticizer does not accumulate within the adhesive layer sufficiently to diminish the properties and quality of the adhesive. This advantageous result has been observed using microporous polyolefinic film, such as "TESLIN" film, for temperatures from ambient temperature up to about 400 °F (204°C).

In contrast, medium density nonporous polyethylene film labels of the type described in Ewing U.S. Patent Re. 32,929 exhibited creasing, wrinkling and deformation within minutes of application to a plasticized polyvinylchloride article and then exposed to a temperature of about 350°F (177°C). When the PSA-coated sheeting of the present invention is applied to a plasticized polyvinylchloride material, no deformation, wrinkling or creasing of the sheeting was observed even after 60 minutes at an exposure temperature of about 350°F (177°C). In contrast, in each case, the PSA-coated sheeting was coated with the same acrylic PSA known to be a high performance, heat resistance PSA. Such adhesive is referenced in Examples 3 and 4.

The commercially available TESLIN film is known to reflect embodiments of the microporous ultrahigh molecular weight polyolefin material described in U.S. Patent 4,861,644 (such description is incorporated herein by reference.) The film is a microporous matrix composed essentially of ultrahigh molecular weight, high density polyethylene having a network of interconnecting pores communicating throughout the matrix. The density of the ultrahigh molecular weight polyethylene is greater than 0.94 g/cm³. The ultrahigh molecular weight polyethylene has an intrinsic viscosity of at least 18 deciliters/gram, typically 18 to 39 deciliters/gram (col. 2, lines 46-54). The average diameter of the pores within the matrix is in the range of from 0.02 to about 50 micrometers (col. 6, lines 54-59). The microporous matrix can be filled with siliceous fillers such as silica, mica, montmorillonite, kaolinite, asbestos, talc, diatomaceous earth, vermiculite, calcium silicates, aluminum silicates, sodium aluminum silicate, alumina silica gels and glass particles, (col. 4, lines 19-23).

While not intending to be bound by theory, it is believed the plasticizer contained in the polyvinylchloride migrates to the adhesive interface, the micropores within the film matrix appear to act entrap the plasticizer so that it does not accumulate within the adhesive layer. There may be other surface phenomenon contributing to the performance of the adhesive-coated microporous film such as the presence of siliceous filler. However, the end result is believed to be an unexpected finding heretofore unknown by practitioners in the art.

Object and advantages of this invention are further illustrated by the following examples, but the particular materials and amounts thereof recited in these examples, as well as other conditions and details, should not be construed to unduly limit this invention. All materials are commercially available or known to those skilled in the art unless other stated or apparent.

### Examples

### Example 1

A labelstock construction was prepared by laminating a TESLIN SP-700 (PPG Industries) microporous polyethylene film (190 micrometer (µm) thick) with an acrylic pressure sensitive adhesive coating. The adhesive was first coated onto a silicone release liner and then transferred to the "TESLIN" film with release liner intact using conventional transfer coating techniques. The acrylic adhesive contained a 90/10 weight ratio of isooctylacrylate and acrylic acid monomer. The a 2 mil (51 µm) thick adhesive layer was prepared by irradiating the monomers with ultraviolet light by using a two stage method described in U.S. Patent 4,391,687 (Vesley), example 3 and such description is incorporated herein by reference. One inch (2.54 cm) wide strips of the PSA coated labelstock were applied to three different plasticized polyvinylchloride substrates, substrate A, B, and C. In each case the release liner was first removed and the one inch (2.54 cm) wide adhesive coated TESLIN strip was then directly applied to the plasticized polyvinylchloride substrate to form respective laminates AA, BB, and CC. The laminate in each case was then placed in a convection oven and heated to a temperature of about 70°C (158°F) for a period of about 72 hours. Each laminate was then removed from the oven and allowed to cool to room temperature. The laminates A, B, and C were then visually inspected and found to be free of distortion, creasing or wrinkling and showed no sign of delamination or fraying along the edges. A 180° peel adhesion test was then performed on each laminate. This test was performed in a standard manner following ASTM D-3330 at a peel rate of 30.5 cm/min using an INSTRON, Model 1122. The peel adhesion values obtained are summarized in the following Table 1.

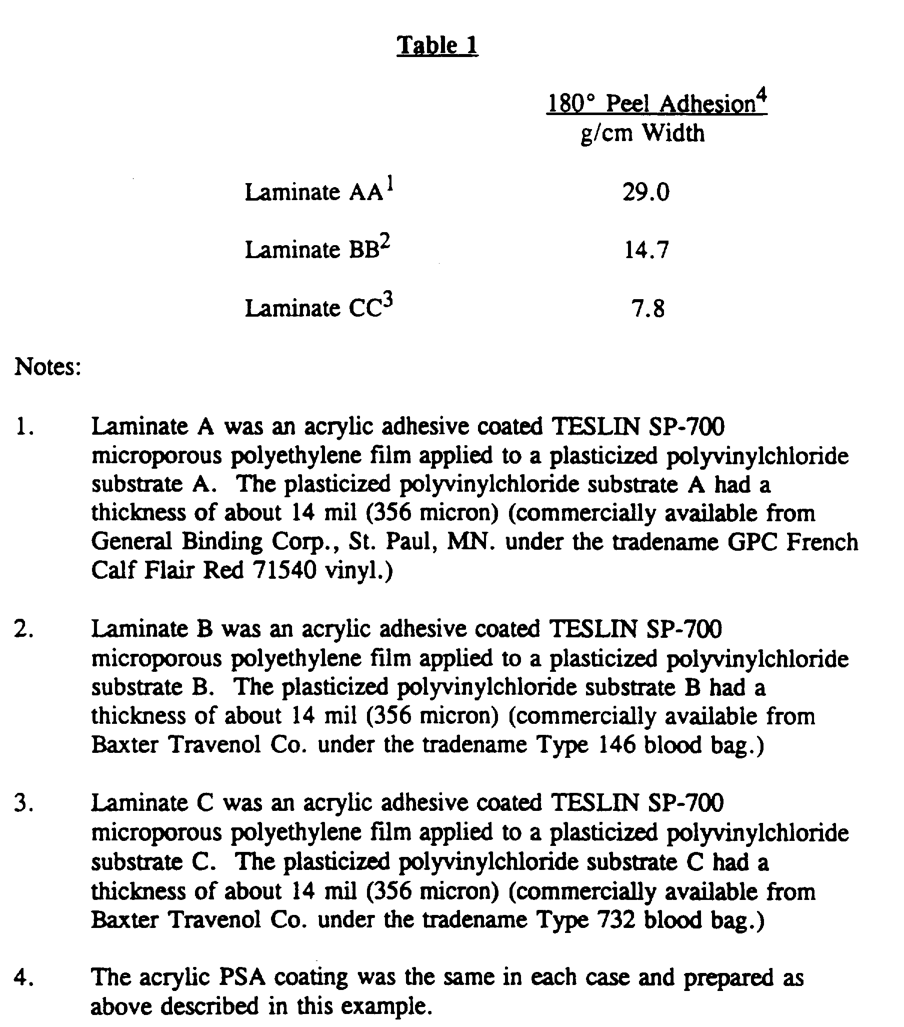

### Example 2 (Comparative Example)

A PSA-coated sheeting was prepared by laminating a non-porous medium density polyethylene film (0.94 g/cm³, 81 µm thick) with an acrylic PSA. The PSA was prepared and coated as described in Example 1. One inch (2.54 cm) wide strips of the adhesive coated labelstock were applied to three different plasticized polyvinylchloride substrates, substrate D, E, and F. In each case the release liner was first removed and the one inch (2.54 cm) wide adhesive coated polyethylene strip was then directly applied to the plasticized polyvinylchloride substrate to form respective laminates DD, EE, and FF. The laminate in each case was then placed in a convection oven and heated to a temperature of about 70°C (158°F) for a period of about 72 hours. Each laminate was then removed from the oven and allowed to cool to room temperature. The laminates AA, BB, and CC were then visually inspected and found to be free of distortion, creasing or wrinkling and showed no sign of delamination or fraying along the edges. A 180° peel adhesion test was then performed on each laminate. This test was performed in a standard manner following ASTM D-3330 at a peel rate of 30.5 cm/min using an INSTRON, Model 1122. The peel adhesion values obtained are summarized in the following Table 2.

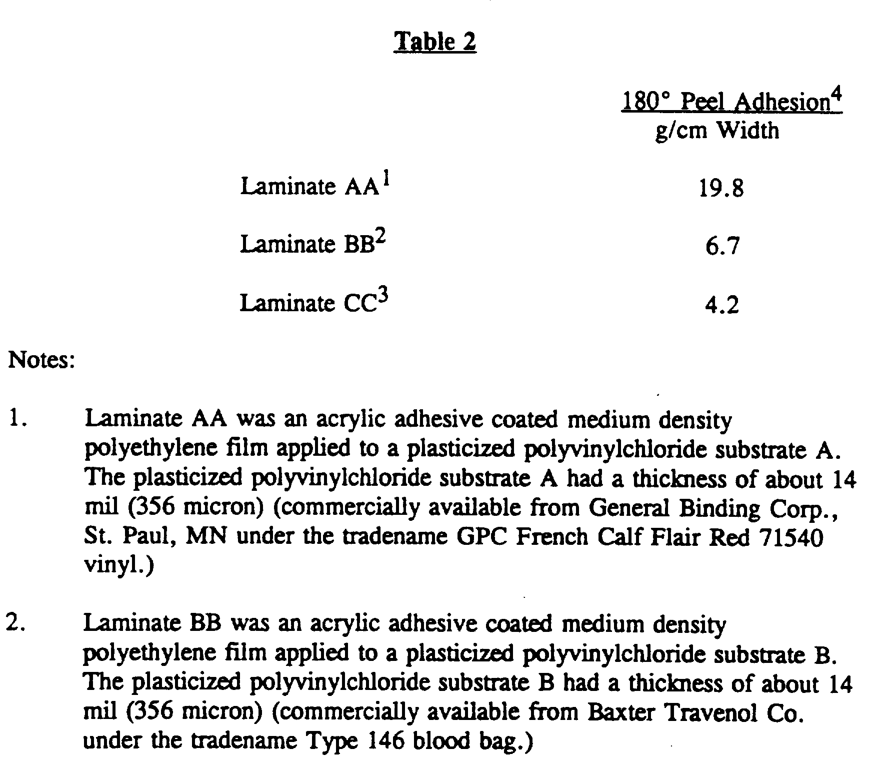

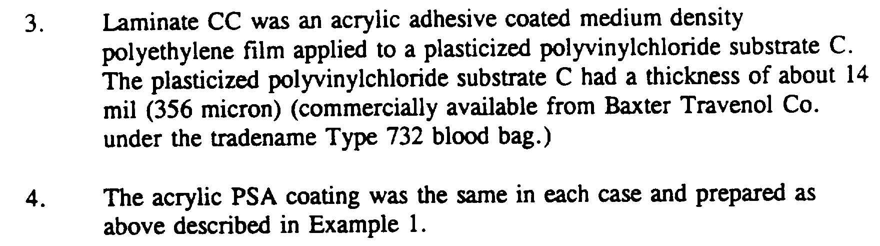

In comparing the peel adhesion values between the microporous polyethylene film/plasticized polyvinylchloride laminates of Example 1 (AA, BB, and CC) with the non-porous polyethylene/plasticized polyvinylchloride laminates of Example 2 (DD, EE, and FF) the peel adhesion was greater for the laminates in Example 1 than the corresponding laminates in Example 2. Additionally, it was observed that after the laminates of Example 2 were peeled apart the adhesive layer appeared to be softer and gummier than that of the corresponding laminates of Example 1. This is believed to be the result of a greater amount of plasticizer accumulating in the adhesive layer in the Example 2 cases.

### Example 3 (Comparative)

A labelstock construction was prepared by laminating a non-porous medium density polyethylene film (0.94 g/cm³, 81 µm thick) with acrylic PSA. This was accomplished using the adhesive and method referenced in Example 1. A one inch (2.54 cm) wide strip of the adhesive coated labelstock was then applied to plasticized polyvinylchloride substrate D to form a laminate DD. (Substrate D is defined in Example 2, Table 2, note 1) Laminate DD was then placed in a convection oven and heated at a temperature of about 350°F (177°C) for about 60 minutes. The laminate was then removed from the oven and allowed to cool to room temperature. Upon visual inspection, it appeared to be wrinkled, creased and badly distorted.

### Example 4

A labelstock construction was prepared by laminating a "TESLIN" SP-700 (PPG Industries, Inc.) microporous polyethylene film (190 µm thick) with an acrylic pressure sensitive adhesive. This was accomplished using the adhesive and method referenced in Example 1. A one inch (2.54 cm) wide strip of the adhesive coated labelstock was then applied to plasticized polyvinylchloride substrate A to form laminate AA. (Substrate A is defined in Example 1, Table 1, Note 1.) Laminate AA was then placed in a convection oven and heated at a temperature of about 350°F (177°C) for about 60 minutes. The laminate was removed from the oven and allowed to cool to room temperature. Upon visual inspection the laminate did not appear to be wrinkled, cracked or deformed. This was in distinct contrast to the findings reported in Example 3 wherein a nonporous polyethylene label was employed.

The labelstock was removed intact from substrate A. A tensile test was then performed on the label stock. This test was performed in a standard manner following ASTM D-882 at a strain rate of 1000%/min using an Instron Model 1122 tester. The tensile strength was measured to be 3.83 kg/2.5 cm of width.

### Example 5 (Comparative)

A PSA sheeting was prepared by laminating TESLIN SP-700 (PPG Industries, Inc.) microporous polyethylene film (190 microns thick) with an acrylic PSA. This was accomplished using the adhesive and method described in Example 1. A one inch (2.5 cm) wide strip of the PSA coated sheeting was then applied to non-plasticized, rigid polyvinylchloride, substrate G to form laminate GG. Laminate GG was then placed in a convection oven and heated at a temperature of about 350°F (177°C) for about 60 minutes. The laminate was removed from the oven and allowed to cool to room temperature. Upon visual inspection the TESLIN film appeared to have cracked. Attempts to remove the sheeting revealed the film crumpled easily to the touch and in-fact, had partially disintegrated to a fine powder under the aging conditions. This was in contrast to the findings reported in Example 4.

Plasticized polyvinlychloride substrate A, as well as top scrapings of the laminates of Examples 4 and 5 were extracted with ethanol. The ethanol extracts were then analyzed by using Fourier Transform Infrared (FTIR) Spectroscopy. The FTIR analysis of the ethanol extract of the film of Example 4 showed the presence of an alkyl phthalate ester similar to the one extracted from substrate A. FTIR analysis of the ethanol extract of the film of Example 5 did not indicate the presence of the phthalate ester plasticizer. These results provide evidence the plasticizer contained in the polyvinylchloride migrates through the adhesive and into the microporous structure of the TESLIN, resulting in much improved flexibility and mechanical integrity of the laminate upon heating of the laminate.

### Examples 6-7 and 8-9 (Comparative)

Graphic marking films that may be screen printed, die cut, or cut on an electronic cutter, useful on highly plasticized vinyl substrates such as used on the sides of flexible "canvas" sided trailers are comprised of the following layers in sequential order.
(1) any art known flexible clear top coat that provides dirt resistance and weatherability;
(2) a colorant layer, such as, art known durable screen print inks, colored translucent vinyl films, or any other art known means of providing a graphic image;
(3) pressure sensitive adhesive coated microporous sheeting; and
(4) releasable liner.

A colorant layer was applied by knife coating (dry coating weight was approximately 0.25 gm/4" x 6") to 7.5 mil TESLIN microporous film. The colorant coating solution was prepared by combining the following components by weight:
80% Bayhydrol 402A (a polyurethane dispersion commercially available from Mobay);
5% Luconyl Black (a 0066 pigment paste commercially available from BASF);
5% 50/50 blend of QR-708 (a water-thickener commercially available from Rohm & Haas); and
10% Butyl cellosolve (commercially available from ) Union Carbide.

The colorant coated TESLIN film was then coated with a pressure sensitive adhesive by direct coating of a solvent based acrylic adhesive The acrylic adhesive was a 90/10 2 MBA/AA (2-methyl butyl acrylate/acrylic acid) coated to a dry coating weight of at 0.35 gm/4" x 6". A second sample (Example 7) was prepared the same as Example 6 except the pressure sensitive adhesive was applied to the colorant coated TESLIN film by laminating a precoated dried pressure sensitive adhesive (same acrylic adhesive), which had been coated on a liner.

The graphic marking film samples were then evaluated in several ways that are relevant to the use of such a film on a canvas-sided truck. Laminate samples were cut on an electronic drum cutter, (Gerber Scientific - Signmaker IVA). The film cut and weeded well.

The samples were then applied to a truck canvas, a material that is used to cover the sides of truck trailers. This is widely used in Europe and to a lesser extent in the United States. A material commonly used is a 20 mil highly plasticized vinyl film reinforced with a scrim manufactured by and commercially available from Verseidag Co. under the trade designation of DURASKIN.

Because the truck canvas is a highly plasticized thick vinyl substrate, plasticizer will readily migrate into the pressure sensitive adhesive layer on the graphic marking film. Using conventional graphic marking film, application to highly plasticized vinyl substrates results in a loss of peel and shear adhesion of the adhesive.

After application to a truck canvas, it was observed that the initial adhesion was excellent. The samples were then placed in a 150°F oven for 7 days. The samples were removed, allowed to cool, and examined. Adhesion to the truck canvas was lower than the initial adhesive but remained in acceptable ranges of adhesion. In contrast, two comparative samples (Examples 8 and 9) were prepared using the same pressure sensitive adhesive (as in Examples 6 and 7) coated on a 1 mil polyester film and a 2 mil cast vinyl film, respectively. After seven days at 150°F, the peel and shear adhesion had decreased more substantially to the point that the films were no longer functional.

After 7 days at 150°F the 180° peel adhesion as determined on Instron Model 1133 are summarized below:

| **Film** | **Peel Adhesion (Lbs./In.)** |
|---|---|
| Teslin (Microporous Film) (average of two samples) | 1.69 |
| 2 Mil Cast Vinyl Film | .76 |
| 1 Mil PET Film | -0- |

Initial peel adhesion values of all samples was approximately 2-2.5 lbs./in (0.35 - 0.45 kg/cm).

Because the truck canvas is a flexible material, at highway speeds the truck canvas will flex and vibrate. A graphic marking film needs to withstand this flexing and vibration even at cold temperatures, typical of northern regional winters, for example below -25°C.

The cold flexibility of the film samples was evaluated in the following manner: A graphic marking film prepared according to Example 6 was applied to truck canvas and a 40 mm x 40 mm piece of the laminate was placed in a Schroder continuous folding machine (MP 49). The apparatus was placed in a cold room at -25°C and flexed at 200 cycles/minute. After 10,000 cycles the laminate showed no signs of cracking. In contrast, a graphic marking film prepared according to Example 9 (2 mil cast vinyl sample) failed in less than 1000 cycles.

### Examples 10-12

The following graphic marking film construction was prepared comprising in sequential order (1) a flexible dirt resistant, weatherable clear coat; (2) a printed 4-color graphic image; (3) a microporous film; (4) a flexible pressure-sensitive adhesive; and (5) a releasable liner.

This construction was prepared and evaluated by first laminating TESLIN to a precoated pressure sensitive adhesive (same adhesive as used in Examples 6-9) on a releasable liner. This adhesive-coated film was then screen printed using three types of screen printing inks.
- Example 10: solvent based ink (3900 inks commercially available from 3M)
- Example 11: UV cured ink (9700 inks commercially available from 3M)
- Example 12: Water based ink (2100 inks commercially available from 3M)

In each case the adhesion of the inks to microporous film was excellent. Results of the cold flex test were good to fair, depending on the flexibility of the ink itself.

Depending on the flexibility of the ink and clear coat 4-color screen printable, graphic marking film of the present invention are useful for canvas sided trucks.

Although the present invention has been described with respect to specific embodiments, the invention is believed to be broader than the specific embodiments and applicable to PSA coated microporous polymeric film labels generally, particularly microporous polyolefin film labels, as applied to plasticized polymeric surfaces. Accordingly, the invention is not intended to be limited to the specific embodiments but rather, is defined by the claims and equivalents thereof.

## Claims

1. A combination of a pressure sensitive adhesive coated sheeting on a plasticized polyvinylchloride surface wherein the pressure sensitive adhesive coated sheeting comprises a microporous olefin substrate and pressure sensitive adhesive coating, the microporous olefin substrate comprises ultrahigh molecular weight linear polyethylene having an intrinsic viscosity of at least about 18 deciliters/gram.

2. The combination according to claim 1, wherein the microporous olefin substrate has a network of interconnecting pores distributed throughout the substrate, the pores comprising at least 35 percent by volume of the microporous olefin substrate.

3. The combination according to claim 1, wherein the microporous olefin substrate has finely divided particulate siliceous filler distributed therein.

4. The combination according to claim 1, wherein the ultrahigh molecular weight polyethylene is a high density polyethylene having a density greater than 0.94 gm/cm³.

5. The combination according to claim 2, wherein the average diameters of the pores is in a range of 0.02 and 0.5 micrometers.

6. The combination according to claim 1, wherein the plasticized polyvinylchloride surface comprises a plasticizer selected from the group consisting of phthalic esters, dibasic acid esters, trimellitates, phosphates, epoxides, benzoates, citrates and combinations thereof.

7. A pressure sensitive adhesive sheeting comprising a microporous olefin substrate and a pressure sensitive adhesive coating, the microporous olefin substrate comprising ultrahigh molecular weight linear polyethylene having an intrinsic viscosity of at least about 18 deciliters/gram, the microporous olefin substrate having a network of interconnecting pores distributed throughout the substrate, the pores having entrapped therein plasticizer that has migrated through the adhesive coating from a plasticized polymeric surface to which said sheeting has been applied.

8. A pressure sensitive adhesive label comprising a substrate and a pressure sensitive adhesive coating, said substrate comprising a microporous material comprising ultrahigh molecular weight linear polyethylene having an intrinsic viscosity of at least about 18 deciliters/gram, said microporous material having a network of interconnecting pores distributed throughout said material, said pores having entrapped therein plasticizer oil which has migrated through said adhesive coating and from a plasticized polymeric surface to which said label has been applied.

9. The pressure sensitive adhesive sheeting according to claim 8 wherein the plasticizer is selected from the group consisting of phthalic esters, dibasic acid esters, trimellitates, phosphates, epoxides, benzoates, citrates and combinations thereof.

10. The pressure sensitive adhesive sheeting according to claim 8 wherein the ultrahigh molecular weight polyethylene is a high density polyethylene having a density greater than 0.94 gm/cm³.

11. The pressure sensitive adhesive sheeting according to claim 8 wherein the average diameter of the pores in a range between about 0.02 and 0.5 micrometers.

12. A pressure sensitive adhesive label comprising a substrate and pressure sensitive adhesive coating, said substrate comprising a microporous material comprising a polyolefin, said microporous material having a network of interconnecting pores distributed throughout said material, said pores having entrapped therein plasticizer oil which has migrated through said adhesive coating and from a plasticized polymeric surface to which said label has been applied.

13. The pressure sensitive adhesive sheeting according to claim 11 where the average diameter of said pores is in a range between about 0.02 and 0.5 micrometers.

14. The pressure sensitive adhesive label as in claim 8 wherein the plasticizer oil preferentially accumulates within the network of interconnecting pores rather than the adhesive coating.

15. The pressure sensitive adhesive label as in claim 12 wherein the plasticizer oil preferentially accumulates within the network of interconnecting pores rather than the adhesive coating.

16. A pressure sensitive adhesive label comprising a substrate and a pressure sensitive adhesive coating, said substrate comprising a microporous material comprising ultrahigh molecular weight linear polyethylene having an intrinsic viscosity of at least 18 deciliters/gram, said microporous material having a network of interconnecting pores distributed throughout said material, said pores having entrapped therein plasticizer oil which has migrated through said adhesive coating and from a plasticized polymeric surface onto which said label has been applied, said label on said plasticized polymeric surface having the property that it does not deform, crease or wrinkle when exposed to elevated temperatures up to about 350°F (177°C).

17. A pressure sensitive adhesive label comprising a substrate and a pressure sensitive adhesive coating, said substrate comprising a microporous material comprising ultrahigh molecular weight linear polyethylene having an intrinsic viscosity of at least 18 deciliters/gram, said microporous material having a network of interconnecting pores distributed throughout said material, said pores having entrapped therein plasticizer oil which has migrated through said adhesive coating and from a plasticized polymeric surface of a blood storage bag onto which said label has been applied, said label on said plasticized polymeric surface having the property that it does not delaminate, wrinkle or deform when exposed to temperatures up to 250°F (121°C).

18. A pressure sensitive adhesive label comprising a substrate and a pressure sensitive adhesive coating, said substrate comprising a microporous material comprising a polyolefin, said microporous material having a network of interconnecting pores distributed throughout said material, said pores having entrapped therein plasticizer oil which has migrated through said adhesive coating and from a plasticized polymeric surface to which said label has been applied, the effect being that the plasticizer oil preferentially accumulates within the network of interconnecting pores rather than the adhesive coating.

19. A pressure sensitive adhesive label comprising a substrate and a pressure sensitive adhesive coating, said substrate comprising a microporous material comprising ultrahigh molecular weight linear polyethylene having an intrinsic viscosity of at least about 18 deciliters/gram, said microporous material having a network of interconnecting pores distributed throughout said material, said pores having entrapped therein plasticizer oil which has migrated through said adhesive coating and from a plasticized polymeric surface to which said label is applied, the effect being that the plasticizer oil preferentially accumulates within the network of interconnecting pores rather than the adhesive coating.

## Patentansprüche

1. Kombination einer mit einem selbsthaftenden Klebstoff beschichteten Folie auf einer weichmacherhaltigen Polyvinylchloridoberfläche, wobei die mit einem selbsthaftenden Klebstoff beschichtete Folie einen mikroporösen Olefinträger und eine selbsthaftende Kleberstoffbeschichtung umfaßt, wobei der mikroporöse Olefinträger lineares Polyethylen mit ultrahohem Molekulargewicht umfaßt, das eine innere Viskosität von mindestens etwa 18 Deziliter/Gramm aufweist.

2. Kombination nach Anspruch 1, wobei der mikroporöse Olefinträger ein Netzwerk von miteinander verbundenen Poren aufweist, die über den ganzen Träger verteilt sind, wobei die Poren mindestens 35 Volumenprozent des mikroporösen Olefinträgers umfassen.

3. Kombination nach Anspruch 1, wobei der mikroporöse Olefinträger einen feinen, dispersen, kieselsäurehaltigen Füllstoff aufweist, der in ihr verteilt ist.

4. Kombination nach Anspruch 1, wobei das Polyethylen mit ultrahohem Molekulargewicht ein Polyethylen mit hoher Dichte ist, das eine Dichte von mehr als 0,94 g/cm³ aufweist.

5. Kombination nach Anspruch 2, wobei der mittlere Durchmesser der Poren in einem Bereich von 0,02 bis 0,5 Mikrometern liegt.

6. Kombination nach Anspruch 1, wobei die weichmacherhaltige Polyvinylchloridoberfläche einen Weichmacher umfaßt, der aus Phthalsäureestern, zweibasischen Säureestern Trimellitaten, Phosphaten, Epoxiden, Benzoaten, Citraten und deren Kombinationen ausgewählt ist.

7. Folie mit selbsthaftendem Klebstoff, umfassend einen mikroporösen Olefinträger und eine selbsthaftende Klebstoffbeschichtung, wobei der mikroporöse Olefinträger lineares Polyethylen mit ultrahohem Molekulargewicht umfaßt, das eine innere Viskosität von mindestens etwa 18 Deziliter/Gramm aufweist, wobei der mikroporöse Olefinträger ein Netzwerk von miteinander verbundenen, über den ganzen Träger verteilten Poren aufweist, wobei die Poren Weichmacher eingeschlossen haben, der von einer weichmacherhaltigen Polymeroberfläche, auf die die Folie aufgebracht wurde, durch die Klebstoffbeschichtung gewandert ist.

8. Aufkleber mit selbsthaftendem Klebstoff, umfassend einen Träger und eine selbsthaftende Klebstoffbeschichtung, wobei der Träger ein mikroporöses Material umfaßt, umfassend lineares Polyethylen mit ultrahohem Molekulargewicht, das eine innere Viskosität von mindestens etwa 18 Deziliter/Gramm aufweist, wobei das mikroporöse Material ein Netzwerk von miteinander verbundenen, über das ganze Material verteilten Poren aufweist, wobei die Poren Weichmacheröl eingeschlossen haben, das von einer weichmacherhaltigen Polymeroberfläche, auf die der Aufkleber aufgebracht wurde, und durch die Klebstoffbeschichtung gewandert ist.

9. Folie mit selbsthaftendem Klebstoff nach Anspruch 8, wobei der Weichmacher aus Phthalsäureestern, zweibasischen Säureestern Trimellitaten, Phosphaten, Epoxiden, Benzoaten, Citraten und deren Kombinationen ausgewählt ist.

10. Folie mit selbsthaftendem Klebstoff nach Anspruch 8, wobei das Polyethylen mit ultrahohem Molekulargewicht ein Polyethylen mit hoher Dichte ist, das eine Dichte von mehr als 0,94 g/cm³ aufweist.

11. Folie mit selbsthaftendem Klebstoff nach Anspruch 8, wobei der mittlere Durchmesser der Poren in einem Bereich von etwa 0,02 bis 0,5 Mikrometern liegt.

12. Aufkleber mit selbsthaftendem Klebstoff, umfassend einen Träger und eine selbsthaftende Klebstoffbeschichtung, wobei der Träger ein mikroporöses Material umfaßt, umfassend ein Polyolefin, wobei das mikroporöse Material ein Netzwerk von miteinander verbundenen, über das ganze Material verteilten Poren aufweist, wobei die Poren Weichmacheröl eingeschlossen haben, welches von einer weichmacherhaltigen Polymeroberfläche auf die der Aufkleber aufgebracht wurde, und durch die Klebstoffbeschichtung gewandert ist.

13. Folie mit selbsthaftendem Klebstoff nach Anspruch 11, wobei der mittlere Durchmesser der Poren in einem Bereich von 0,02 bis 0,5 Mikrometern liegt.

14. Aufkleber mit selbsthaftendem Klebstoff wie in Anspruch 8, wobei sich das Weichmacheröl stärker bevorzugt in dem Netzwerk der miteinander verbundenen Poren als in der Klebstoffbeschichtung ansammelt.

15. Aufkleber mit selbsthaftendem Klebstoff wie in Anspruch 12, wobei sich das Weichmacheröl stärker bevorzugt in dem Netzwerk der miteinander verbundenen Poren als in der Klebstoffbeschichtung ansammelt.

16. Aufkleber mit selbsthaftendem Klebstoff, umfassend einen Träger und eine selbsthaftende Klebstoffbeschichtung, wobei der Träger ein mikroporöses Material umfaßt, umfassend lineares Polyethylen mit ultrahohem Molekulargewicht, das eine innere Viskosität von mindestens 18 Deziliter/Gramm aufweist, wobei das mikroporöse Material ein Netzwerk von miteinander verbundenen, über das ganze Material verteilten Poren aufweist, wobei die Poren Weichmacheröl eingeschlossen haben, das von einer weichmacherhaltigen Polymeroberfläche, auf die der Aufkleber aufgebracht wurde, und durch die Klebstoffbeschichtung gewandert ist, wobei der Aufkleber auf der weichmacherhaltigen Polymeroberfläche die Eigenschaft aufweist, sich nicht zu verformen, nicht zu falten oder zu knittern, wenn er erhöhten Temperaturen bis zu etwa 350°F(177°C) ausgesetzt wird.

17. Aufkleber mit selbsthaftendem Klebstoff, umfassend einen Träger und eine selbsthaftende Klebstoffbeschichtung, wobei der Träger ein mikroporöses Material umfaßt, umfassend lineares Polyethylen mit ultrahohem Molekulargewicht, das eine innere Viskosität von mindestens 18 Deziliter/Gramm aufweist, wobei das mikroporöse Material ein Netzwerk miteinander verbundener, über das ganze Material verteilter Poren aufweist, wobei die Poren Weichmacheröl eingeschlossen haben, das durch die Klebstoffbeschichtung und von einer weichmacherhaltigen Polymeroberfläche eines Blutvorratsbeutels, auf den der Aufkleber aufgebracht wurde, gewandert ist, wobei der Aufkleber auf der weichmacherhaltigen Polymeroberfläche die Eigenschaft aufweist, nicht abzublättern, zu knittern oder sich zu verformen, wenn er Temperaturen bis zu 250°F(121°C) ausgesetzt wird.

18. Aufkleber mit selbsthaftendem Klebstoff, umfassend einen Träger und eine selbsthaftende Klebstoffbeschichtung, wobei der Träger ein mikroporöses Material umfaßt, umfassend ein Polyolefin, wobei das mikroporöse Material ein Netzwerk von miteinander verbundenen, über das ganze Material verteilten Poren aufweist, wobei die Poren Weichmacheröl eingeschlossen haben, das von einer weichmacherhaltigen Polymeroberfläche, auf die der Aufkleber aufgebracht wurde, und die die Klebstoffbeschichtung gewandert ist, wobei die Wirkung darin besteht, daß das Weichmacheröl sich stärker bevorzugt innerhalb des Netzwerks der miteinander verbundenen Poren ansammelt als in der Klebstoffbeschichtung.

19. Aufkleber mit selbsthaftendem Klebstoff, umfassend einen Träger und eine selbsthaftenden Klebstoffbeschichtung, wobei der Träger ein mikroporöses Material umfaßt, umfassend ein lineares Polyethylen mit ultrahohem Molekulargewicht, das eine innere Viskosität von mindestens etwa 18 Deziliter/Gramm aufweist, wobei das mikroporöse Material ein Netzwerk von miteinander verbundenen, über das ganze Material verteilten Poren aufweist, wobei die Poren Weichmacheröl eingeschlossen haben, das von einer weichmacherhaltigen Polymeroberfläche, auf die der Aufkleber aufgebracht wurde, und durch die Klebstoffbeschichtung gewandert ist, wobei die Wirkung darin besteht, daß sich das Weichmacheröl stärker bevorzugt innerhalb des Netzwerks der miteinander verbundenen Poren ansammelt als in der Klebstoffbeschichtung.

## Revendications

1. Combinaison d'une feuille revêtue d'un adhésif autocollant sur une surface de poly(chlorure de vinyle) plastifié dans laquelle la feuille revêtue d'adhésif autocollant comprend un substrat oléfinique microporeux et un revêtement adhésif autocollant, le substrat oléfinique microporeux est constitué d'un polyéthylène linéaire à masse moléculaire très élevée ayant une viscosité intrinsèque d'au moins 18 dl/g.

2. Combinaison selon la revendication 1, dans laquelle le substrat oléfinique microporeux a un réseau de pores reliés entre eux distribué au travers du substrat, les pores constituant au moins 35% en volume du substrat oléfinique microporeux.

3. Combinaison selon la revendication 1, dans laquelle le substrat oléfinique microporeux possède une charge siliceuse particulaire finement divisée qui y est distribuée.

4. Combinaison selon la revendication 1, dans laquelle le polyéthylène à masse moléculaire très élevée est un polyéthylène haute densité ayant une masse volumique supérieure à 0,94 g/cm³.

5. Combinaison selon la revendication 2, dans laquelle le diamètre moyen des pores est compris entre 0,02 et 0,5 µm.

6. Combinaison selon la revendication 1, dans laquelle la surface plastifiée de poly(chlorure de vinyle) comprend un plastifiant choisi dans le groupe constitué des esters phtaliques, des esters de diacides, des trimellitates, des phosphates, des époxydes, des benzoates, des citrates et leurs combinaisons.

7. Feuille d'adhésif autocollant comprenant un substrat oléfinique microporeux et un revêtement adhésif autocollant, le substrat oléfinique microporeux comprenant un polyéthylène linéaire à masse moléculaire très élevée ayant une viscosité intrinsèque d'au moins 18 décilitres/gramme, le substrat oléfinique microporeux possédant un réseau de pores reliés entre eux distribué au travers du substrat, les pores piégeant à l'intérieur d'eux le plastifiant qui a migré au travers du revêtement adhésif à partir d'une surface polymère plastifiée à laquelle ladite feuille a été appliquée.

8. Etiquette adhésive autocollante comprenant un substrat et un revêtement adhésif autocollant, ledit substrat comprenant une matière microporeuse constituée de polyéthylène linaire à masse moléculaire très élevée ayant une viscosité intrinsèque d'au moins 18 décilitres/gramme, ladite matière microporeuse ayant un réseau de pores reliés entre eux distribué au travers de ladite matière, lesdits pores piégeant à l'intérieur d'eux l'huile plastifiante qui a migré au travers dudit revêtement adhésif et à partir d'une surface polymère plastifiée à laquelle ladite étiquette a été appliquée.

9. Feuille adhésive autocollante selon la revendication 8, dans laquelle le plastifiant est choisi dans le groupe constitué des esters phtaliques, des esters de diacides, des trimellitates, des phosphates, des époxydes, des benzoates, des citrates et leurs combinaisons.

10. Feuille adhésive autocollante selon la revendication 8 dans laquelle le polyéthylène à masse moléculaire très élevée est un polyéthylène haute densité ayant une masse volumique supérieure à 0,94 g/cm³.

11. Feuille adhésive autocollante selon la revendication 8, dans laquelle le diamètre moyen des pores est compris entre environ 0,02 µm et 0,5 µm.

12. Etiquettes adhésives autocollantes comprenant un substrat et un revêtement d'adhésif autocollant, ledit substrat comprenant une matière microporeuse, comprenant une polyoléfine, ladite matière microporeuse ayant un réseau de pores reliés entre eux distribué au travers de ladite matière, lesdits pores piégeant à l'intérieur d'eux l'huile plastifiante qui a migré au travers dudit revêtement adhésif et à partir d'une surface polymère plastifiée à laquelle ladite étiquette a été appliquée.

13. Feuille adhésive autocollante selon la revendication 11, dans laquelle le diamètre moyen desdits pores est compris entre environ 0,02 et 0,5 µm.

14. Etiquette adhésive autocollante selon la revendication 8, dans laquelle l'huile plastifiante s'accumule de préférence à l'intérieur du réseau de pores reliés entre eux plutôt que dans le revêtement adhésif.

15. Etiquette adhésive autocollante selon la revendication 12, dans laquelle l'huile plastifiante s'accumule de préférence à l'intérieur du réseau de pores reliés entre eux plutôt que dans le revêtement adhésif.

16. Etiquette adhésive autocollante comprenant un substrat et un revêtement adhésif autocollant, ledit substrat comprenant une matière microporeuse constituée de polyéthylène linéaire à masse moléculaire très élevée ayant une viscosité intrinsèque d'au moins 18 décilitres/gramme, ladite matière microporeuse ayant un réseau de pores reliés entre eux distribué au travers de ladite matière, lesdits pores piégeant à l'intérieur d'eux l'huile plastifiante qui a migré au travers dudit revêtement adhésif et à partir d'une surface polymère plastifiée sur laquelle on a appliqué ladite étiquette, ladite étiquette sur ladite surface polymère plastifiée ayant la propriété qu'elle ne se déforme pas, ne plisse pas ou ne se froisse pas lorsqu'elle est exposée à des températures élevées atteignant environ 177°C (350°F).

17. Etiquette adhésive autocollante comprenant un substrat et un revêtement adhésif autocollant, ledit substrat comprenant une matière microporeuse constituée de polyéthylène linéaire à masse moléculaire extrêmement élevée ayant une viscosité intrinsèque d'au moins 18 décilitres/gramme, ladite matière microporeuse ayant un réseau de pores reliés entre eux distribué au travers de ladite matière, lesdits pores piégeant à l'intérieur d'eux l'huile plastifiante qui a migré au travers dudit revêtement adhésif et à partir d'une surface polymère plastifiée d'une poche de stockage de sang sur laquelle on a appliqué ladite étiquette, ladite étiquette sur ladite surface polymère plastifiée ayant la propriété qu'elle ne se déstratifie pas, ne froisse pas, ne se déforme pas lorsqu'elle est exposée à des températures atteignant 121°C (250°F).

18. Etiquette adhésive autocollante comprenant un substrat et un revêtement adhésif autocollant, ledit substrat comprenant une matière microporeuse constituée d'une polyoléfine, ladite matière microporeuse ayant un réseau de pores reliés entre eux distribué au travers de ladite matière, lesdits pores piégeant à l'intérieur d'eux l'huile plastifiante qui a migré au travers dudit revêtement adhésif et à partir d'une surface polymère plastifiée à laquelle on a appliqué ladite étiquette, l'effet étant que l'huile plastifiante s'accumule de préférence à l'intérieur du réseau de pores reliés entre eux plutôt que dans le revêtement adhésif.

19. Etiquette adhésive autocollante comprenant un substrat et un revêtement adhésif autocollant, ledit substrat comprenant une matière microporeuse constituée de polyéthylène linéaire à masse moléculaire très élevée ayant une viscosité intrinsèque d'au moins 18 décilitres/gramme, ladite matière microporeuse ayant un réseau de pores reliés entre eux distribué au travers de ladite matière, lesdits pores piégeant à l'intérieur d'eux l'huile plastifiante qui a migré au travers dudit revêtement adhésif et à partir d'une surface polymère plastifiée à laquelle on a appliqué ladite étiquette, l'effet étant que l'huile plastifiante s'accumule de préférence à l'intérieur du réseau des pores reliés entre eux plutôt que dans le revêtement adhésif.
